# EUROPEAN PATENT APPLICATION

(11) **EP 3 053 497 A1**
(43) Date of publication of application: **10.08.2016**
(21) Application number: 16154273.3
(22) Date of filing: 04.02.2016
(51) Int. Cl.: A47J 42/04

(54) **CONDIMENT MILL**

(30) Priority: 05.02.2015 US 201562112259 P
(71) Applicant: King's Flair Development Ltd., Hong Kong (HK)
(72) Inventor: WONG, Siu Wah, Hong Kong (HK)
(74) Representative: Mignini, Davide Giuseppe

(57) **Abstract**

The present invention relates to a condiment mill capable of separately accommodating and grinding two condiments depending on the orientation of the condiment mill. The condiment mill comprises two superimposed compartments which may be inverted for grinding two condiments separately and allowing to release the condiment out of the mill by rotating one of the two compartments relative to the other.

## Description

### Technical Field of the Invention

This invention relates generally to a condiment mill, and particularly, to a condiment mill that has two superimposed compartments for accommodating and grinding two condiments separately by rotating one of the two compartments relative to the other.

### Background of the Invention

Condiment mills that can separately accommodate and grind two different condiments, for example, salt and pepper, are currently available. These condiment mills typically comprise two parallel containers separated from each other. At the bottom of each of the containers, a grinding mechanism is provided for grinding the respective condiment. Each of the grinding mechanisms is driven by a respective shaft extending upwardly through the respective container. Both shafts are drivingly connected to a gear mechanism provided on top of the containers. The gear mechanism is configured in such a manner that when the gear mechanism is rotated in one direction, one of the shafts is driven in rotation, and consequently the respective grinding mechanisms is driven to grind and dispense the respective one of the condiments, and when the gear mechanism is rotated in another direction, the other one of the shafts is driven in rotation, and consequently the respective other grinding mechanism is driven to grind and dispense the other condiment.

This kind of condiment mills have the drawback that the gear mechanism needs to be rotated in different directions for different condiments. This operation mode requires the user to remember to rotate the gear mechanism in the correct direction in order to obtain the needed condiment, which increases the chances of misoperation. Furthermore, users may prefer to always rotate the gear mechanism in one direction, no matter which condiment they want to grind.

Therefore, there is a need for a condiment mill that is able to separately accommodate and grind two different condiments, which allows the user to rotate the gear mechanism in any direction for either one of the condiments. Such a condiment mill may comprise a different mechanism to switch between the two condiments, unlike the prior art wherein the different rotation directions of the gear mechanism correspond to the different condiments.

### Summary of the Invention

The present invention has a principle object of providing a condiment mill which has two compartments arranged one on the other. The two compartments accommodate two condiments separately, and the condiment in one compartment is ground by rotating the other compartment relative to said compartment. More particularly, the present invention aims to provide a condiment mill which can be conveniently transformed between the two condiments for grinding operation by inverting the mill. The selection of condiment being ground is simple and easy, and realized by turning over the condiment mill. The selection and grinding of the condiment is independent of the direction of rotation.

These and other objects are satisfied by the present invention, which provides a condiment mill comprising two compartments stacked one on the other, and a shaft extending through the stacking interface of both the compartments. The two ends of the shaft are drivingly connected to two grinding mechanisms arranged inside and at a distal end of the two compartments, respectively. In addition, the condiment mill of the present invention is characterized by further comprising a driving mechanism which allows the grinding mechanism in the bottom compartment to be driven by the rotation of the top compartment.

A condiment mill according to a preferred embodiment of the present invention comprises:
a first compartment having a proximal end and a distal end,
a second compartment having a proximal end and a distal end, wherein the first compartment and the second compartment are stacked one on the other at their respective proximal ends, in such a manner that the first and second compartments, are rotatable relative to each other around a rotation axis,
a shaft having a first end and a second end and extending along the rotation axis through the proximal ends of the first and second compartments, into the first and second compartments,
a first grinding mechanism arranged at the distal end of the first compartment and drivingly connected to the first end of the shaft,
a second grinding mechanism arranged at the distal end of the second compartment and drivingly connected to the second end of the shaft,
a driving mechanism coupled to the shaft and arranged to extend through the proximal ends, of both the first and second compartments, the driving mechanism being configured to be engageable with one of the first and second compartments, and be caused by rotation of said engaged compartment to rotate relative to the other compartment which, in turn, drives the grinding mechanism in the other compartment by the shaft.

In a preferred embodiment of the present invention, the condiment mill may further comprise:
a first hub member fixedly secured to the proximal end of the first compartment and having an axial opening,
a second hub member fixedly secured to the proximal end of the second compartment and having an axial opening,
wherein the driving mechanism comprises a bushing coupled to the shaft and rotatably and movably extending through the axial openings, of the first and second hub members, wherein the bushing is able to move to engage with one of the first and second hub members, and the rotation of the compartment with which the bushing engages causes rotation of the bushing so as to rotate the shaft around the rotation axis relative to the other compartment, and the rotation of the shaft drives the grinding mechanism in the other compartment.

In a preferred embodiment of the present invention, the first hub member may be formed integral with a proximal end plate of the first compartment, and the second hub member may be formed integral with a proximal end plate of the second compartment.

In a preferred embodiment of the present invention, the bushing may have an axial throughbore through which the shaft extends to rotatably and movably couple to the bushing.

In a preferred embodiment of the present invention, a cross section of the throughbore corresponds to a cross section of the shaft, such that the bushing is coupled to the shaft in rotation around the rotation axis, and movable along the rotation axis relative to the shaft. Preferably, the cross sections of the shaft and the throughbore are both rectangular.

In a preferred embodiment of the present invention, the bushing may have at least one first protrusion extending radially from a first end of the bushing, and at least one second protrusion extending radially from a second end of the bushing. The first hub member may comprise at least one first recess engageable with the at least one first protrusion, and the second hub member may comprise at least one second recess engageable with the at least one second protrusion.

In a preferred embodiment of the present invention, the first and second hub members may be arranged in such a positional fashion that allows either the at least one first protrusion only or the at least one second protrusion only of the bushing to engage with the respective recess, and the other protrusion is disengageable from the recess thereof. In one specific embodiment, the first and second hub members may be arranged such that a longitudinal distance between the first and second protrusions, is larger than a longitudinal distance between the first and second recesses, thereby allowing either the at least one first protrusion only or the at least one second protrusion only of the bushing to engage with the respective recess.

In a preferred embodiment of the present invention, the bushing may comprise three spaced circumferential first protrusions at the first end thereof, and three spaced circumferential second protrusions at the second end thereof. Correspondingly six first recesses and six second recesses engageable with the respective first and second protrusions may be formed on the first and second hub members, respectively.

In a preferred embodiment of the present invention, a first housing portion may be provided within the first compartment and a second housing portion may be provided within the second compartment. The first and second housing portions together enclose the first and second hub members and the bushing in a manner that the bushing is able to rotate and move.

In a preferred embodiment of the present invention, the first housing portion may comprise a first cylindrical wall extending from a proximal end plate of the first compartment in a direction towards the distal end of the first compartment, and a first cover placed over the first wall and comprising a first orifice for the shaft to rotatably pass through. The second housing portion may comprise a second cylindrical wall extending from a proximal end plate of the second compartment in a direction towards the distal end of the second compartment, and a second cover placed over the second wall and comprising a second orifice for the shaft to rotatably pass through.

In a preferred embodiment of the present invention, the first cylindrical wall may be integrally formed with the first hub member, and the second cylindrical wall may be integrally formed with the second hub member.

In a preferred embodiment of the present invention, the first grinding mechanism may comprise a first grinding wheel fixedly secured to the first end of the shaft, and a first grinding cylinder open at both ends and fixedly attached to the distal end of the first compartment. The second grinding mechanism may comprise a second grinding wheel open at both ends and fixedly secured to the second end of the shaft, and a second grinding cylinder fixedly attached to the distal end of the second compartment.

In a preferred embodiment of the present invention, the first and second grinding wheels may be configured to have a conical shape, and be rotatably accommodated in the first and second grinding cylinders, respectively.

To have a better understanding of the invention reference is made to the following detailed description of the invention and embodiments thereof in conjunction with the accompanying drawings.

### Brief Description of the Drawings

Fig. 1 is a perspective view of a condiment mill constructed according to an embodiment of the present invention.
Fig. 2 is a cross-sectional view of the condiment mill shown in Fig. 1 taken along line A-A.
Fig. 3 is a perspective view of the bushing, the shaft, and the first and second grinding mechanisms of the condiment mill shown in Fig. 1.
Fig. 4 is a perspective view of the condiment mill shown in Fig. 1 taken along line B-B with the first and second grinding mechanisms removed.
Fig. 5 is a top perspective partial view of the condiment mill shown in Fig. 1 taken along line B-B.
Fig. 6 is a bottom perspective partial view of the condiment mill shown in Fig. 1 taken along line B-B.
Fig. 7 is a cross-sectional partial view of the condiment mill shown in Fig. 1 taken along line A-A.

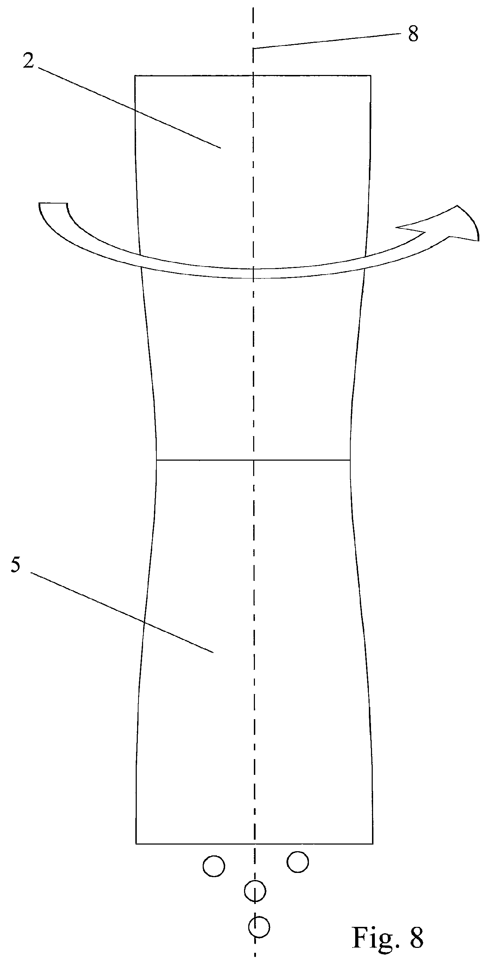

Fig. 8 is a schematic side view of the condiment mill shown in Fig. 1 in the first orientation.
Fig. 9 is a schematic side view of the condiment mill shown in Fig. 1 in the second orientation.

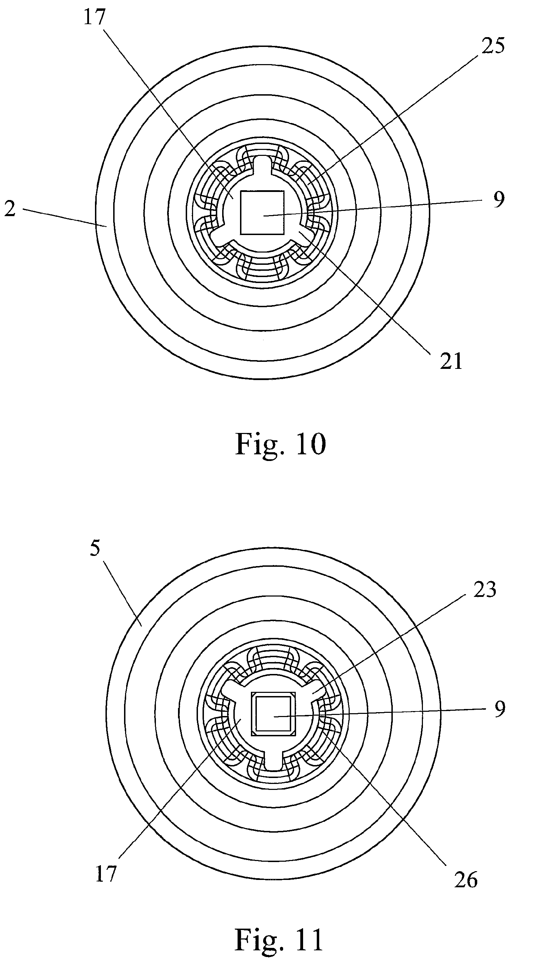

Fig. 10 is a top view of the condiment mill shown in Fig. 1 in the first orientation.
Fig. 11 is a top view of the condiment mill shown in Fig. 1 in the second orientation.

### Detailed Description of the Invention

While this invention is illustrated and described in preferred embodiments, the condiment mill of the present invention may be produced in many different configurations, sizes, forms and materials.

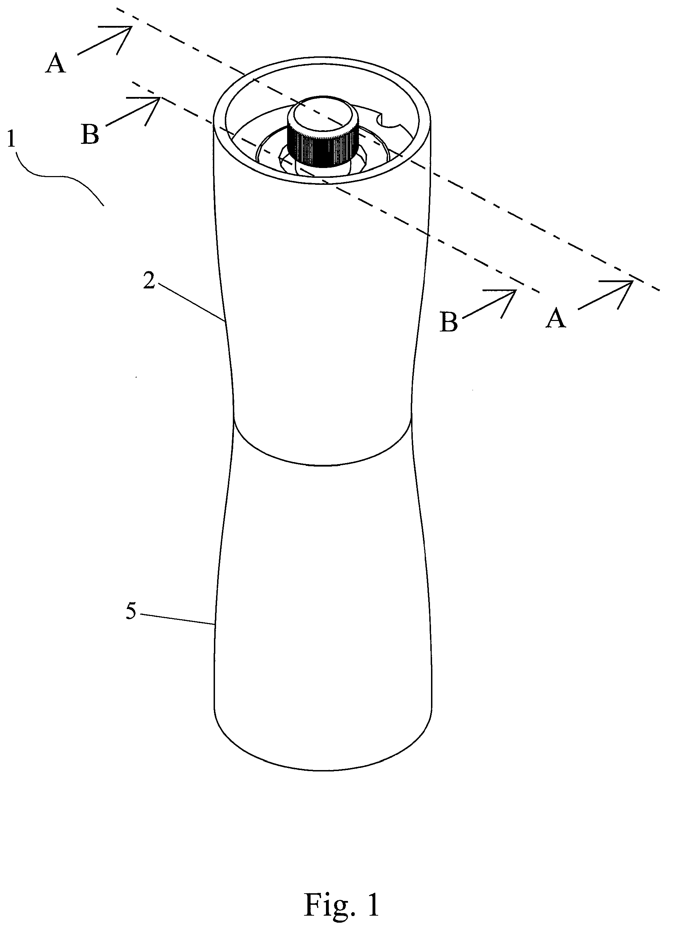

Referring now to the drawings, Fig. 1 illustrates in a perspective view a condiment mill constructed according to a preferred embodiment of the present invention. The condiment mill 1 comprises a first compartment 2 having a proximal end 3 and a distal end 4, and a second compartment 5 having a proximal end 6 and a distal end 7. In this embodiment, both the first compartment 2 and the second compartment 5 are of a generally cylindrical shape. The proximal end 3 of the first compartment 2 is terminated by a proximal end plate 41 and the proximal end 6 of the second compartment 5 is terminated by a proximal end plate 42. The proximal end plate 41 of the first compartment 2 is stacked directly on the proximal end plate 42 of the second compartment 5, in such a manner that the first and second compartments 2 and 5 are rotatable relative to each other around a rotation axis 8 extending in the longitudinal direction of the first and second compartments 2 and 5, which is also the longitudinal direction of the condiment mill 1. Two different kinds of condiments, such as salt and pepper, may be contained in the first and second compartments 2 and 5, respectively.

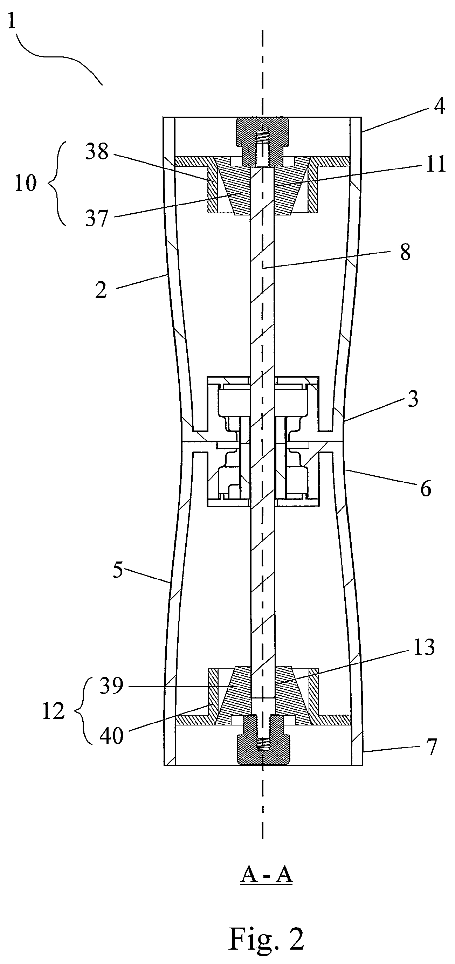

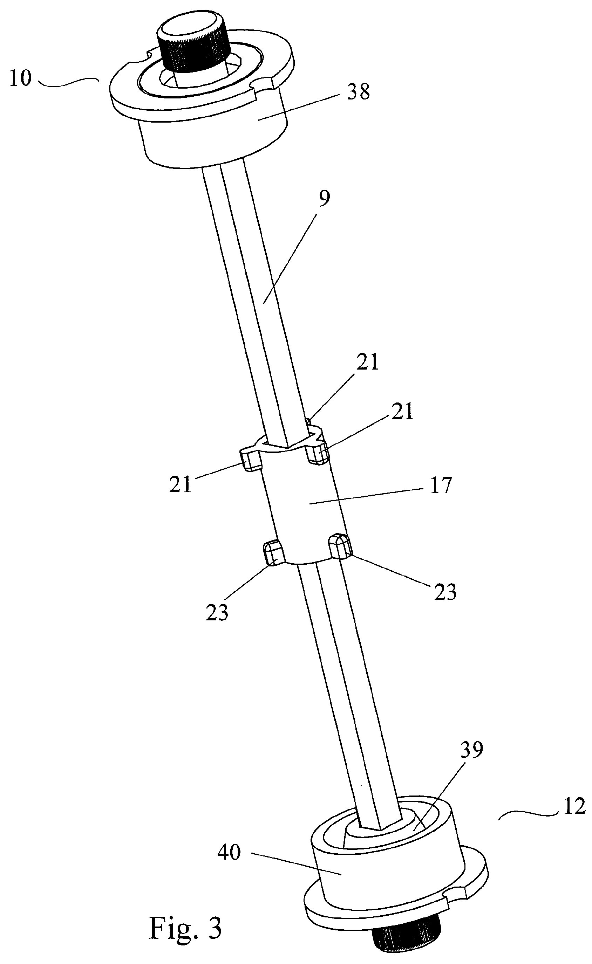

As can be seen in Figs. 2 and 3, a first grinding cylinder 38 has two opened ends and is fixed inside and in the close vicinity of the distal end 4 of the first compartment 2. The first grinding cylinder 38 is configured to accommodate a first grinding wheel 37 in generally conical shape. Similarly, a second grinding cylinder 40 has two opened ends and is fixed inside and in the close vicinity of the distal end 7 of the second compartment 5. The second grinding cylinder 40 is configured to accommodate a second grinding wheel 39 in generally conical shape.

As shown in Fig. 3, the condiment mill 1 further comprises a shaft 9 which extends through the proximal ends 3 and 6 into the first and second compartments 2, 5, and a bushing 17 slidably coupled to the shaft. Both the first and second grinding wheels 37 and 39 are drivingly connected via the shaft 9 to the bushing 17 that is rotatably arranged and runs through the interface between the proximal ends 3 and 6 of the first and second compartments 2 and 5. To be specific, the first grinding wheel 37 is fixedly secured on a first end 11 of the shaft 9, and the second grinding wheel 39 is fixedly secured on a second end 13 of the shaft 9. The bushing 17 is slidably sleeved onto the shaft 9 which extends along the rotation axis 8 (see Fig. 2). The bushing 17 comprises a throughbore 18 through which the shaft 9 extends. The throughbore 18 has a cross section adapted for the cross section of the shaft 9 such that the shaft 9 is driven to rotate around the rotation axis 8 by the rotation of the bushing 17. As illustrated, the cross sections of the shaft 9 and the throughbore 18 in this embodiment are both rectangular, such that when the bushing 17 is caused to rotate around the rotation axis 8, either in clockwise or anti-clockwise direction, both the first grinding wheel 37 and the second grinding wheel 39 are driven to rotate together with the bushing 17 via the shaft 9. When the first or second grinding wheel 37 or 39 is rotated relative to the respective first or second grinding cylinder 38 or 40, the condiment contained in the respective first or second compartment 2 or 5 is ground and released out of the mill 1 through the first or second grinding cylinder 38 or 40, respectively. As can be seen, the bushing 17 serves as a driving mechanism for driving the grinding mechanism in the bottom compartment by the rotation of the top compartment relative to the bottom compartment, which will be explained in details below.

As shown in Fig. 3, the bushing 17 is of a generally cylindrical shape, with three first protrusions 21 spaced circumferentially and extending radially and outwardly from a first end 22 of the bushing 17 at the same height, and three second protrusions 23 spaced circumferentially and extending radially from a second end 24 of the bushing 17 at the same height. The three first protrusions 21 are evenly distributed at the first end 22 of the bushing 17, and the three second protrusions 23 are evenly distributed at the second end 24 of the bushing 17. Those skilled in the art would understand that the numbers of the first protrusions 21 and the second protrusions 23 can be more or less than three, but should be at least one, and that the numbers of the first protrusions 21 and the second protrusions 23 do not need to be identical.

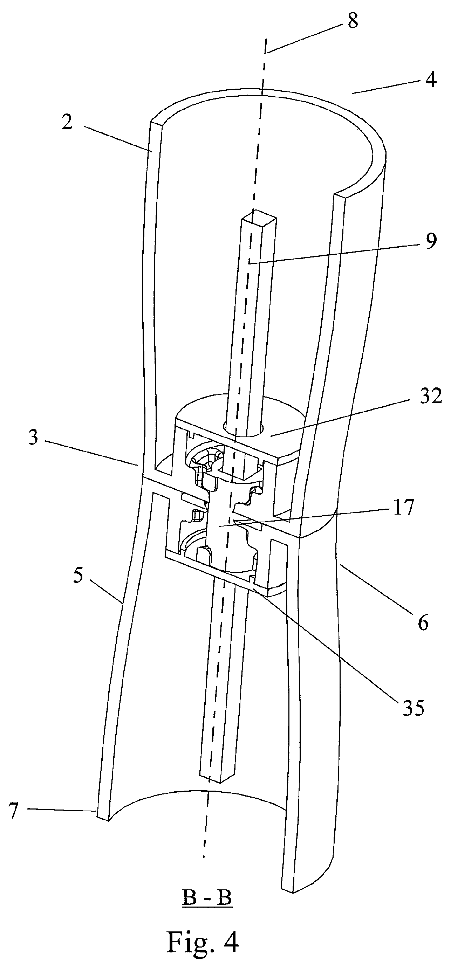

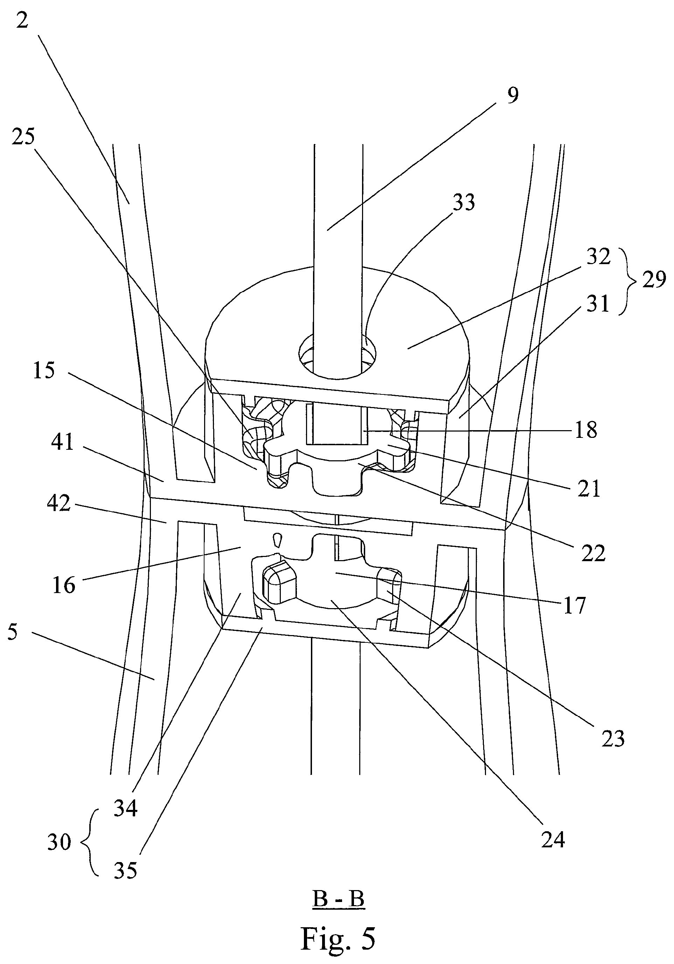

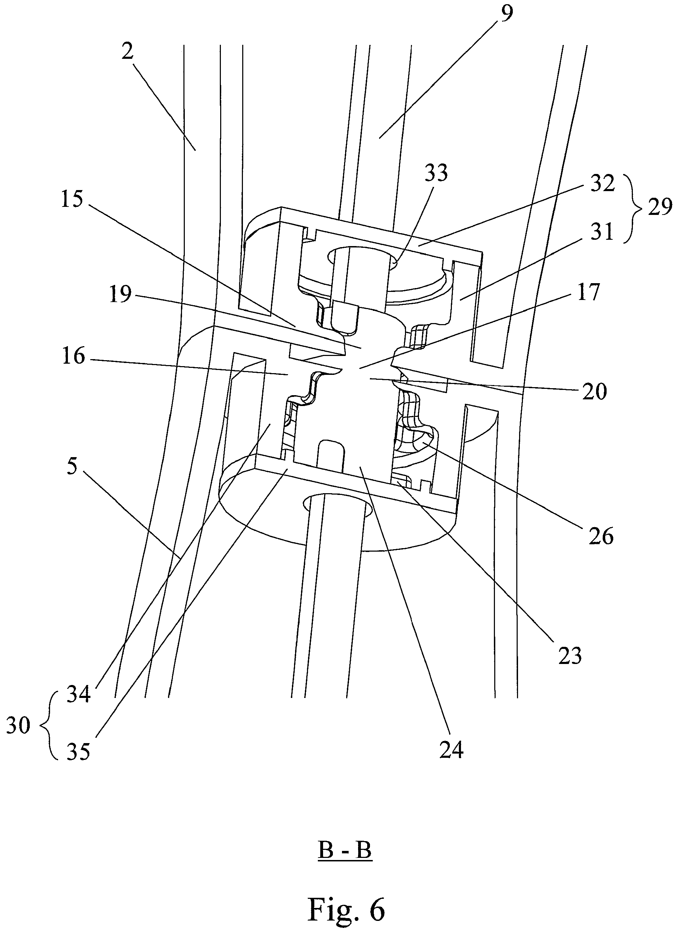

Figs. 4-7 show some essential components of the condiment mill 1 according to the preferred embodiment of the present invention, including the bushing 17, a first hub member 15 and a second hub member 16. The first hub member 15 extends from the proximal end plate 41 of the first compartment 2, having a first opening 19 for the bushing 17 to rotatably and slidably pass through. There are six first recesses 25 formed on a surface of the first hub member 15 facing towards the distal end 4 of the first compartment 2 for receiving and/or engaging with the three first protrusions 21 at the first end 22 of the bushing 17, thereby providing the engagement of the bushing 17 with the first hub member 15. When the first protrusions 21 are received in the corresponding first recesses 25, the bushing 17 is driven to rotate by the rotation of the first compartment 2 around the rotation axis 8, which in turn causes the rotation of the shaft 9.

The second hub member 16 extends from the proximal end plate 42 of the second compartment 2, having a second opening 20 for the bushing 17 to rotatably and slidably pass through. Similarly, there are six second recesses 26 formed on a surface of the second hub member 16 facing towards the distal end 7 of the second compartment 5 for receiving and/or engaging with the three second protrusions 23 at the second end 24 of the bushing 17, thereby providing the engagement of the bushing 17 with the second hub member 16. When the second protrusions 23 are received in the corresponding second recesses 26, the bushing 17 is driven to rotate by the rotation of the second compartment 5 around the rotation axis 8, which in turn causes the rotation of the shaft 9. Those skilled in the art will understand that the numbers of the first recesses 25 and second recesses 26 can be more or less than six, but should be integer multiples of the numbers of the first protrusions 21 and second protrusions 23, respectively.

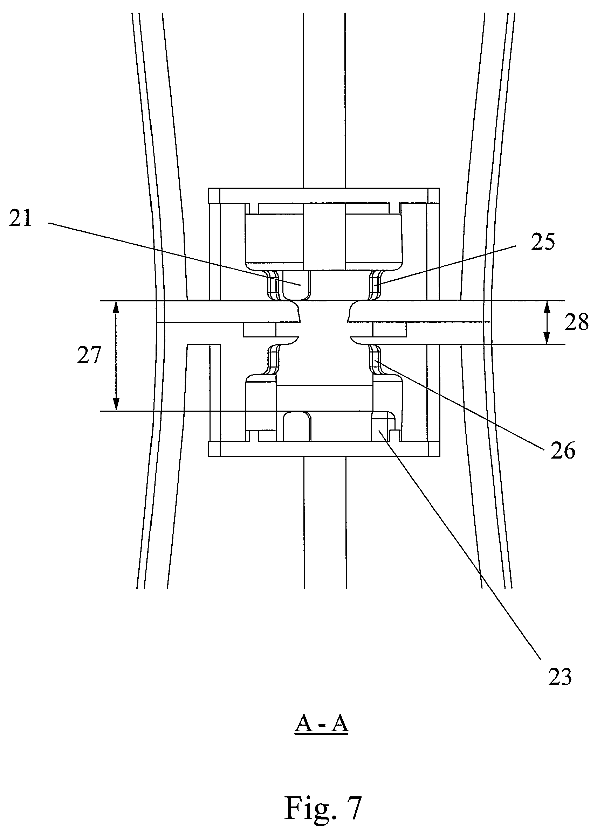

Now turning to Fig. 7, the first and second hub members 15 and 16 are arranged in such a positional fashion that a longitudinal distance 27 between the first protrusions 21 and the second protrusions 23 of the bushing 17 is larger than a longitudinal distance 28 between the first recesses 25 on the first hub member 15 and the second recesses 26 on the second hub member 16.As a result, the first protrusions 21 and the second protrusions 22 of the bushing 17 cannot be both received in (or engaged with) the respective recesses 25, 26 at the same time. In other words, when the first protrusions 21 are received in (or engaged with) the first recesses 25, the second protrusions 23 are out of (or disengaged from) the second recesses 26, allowing the bushing 17 to be rotatable relative to the second compartment 5, and when the second protrusions 23 are received in (or engaged with) the second recesses 26, the first protrusions 21 are out of (or disengaged from) the first recesses 25, allowing the bushing 17 to be rotatable relative to the first compartment 2.In this way, depending on the orientation of the condiment mill 1, either the first protrusions 21 only or the second protrusions 23 only of the bushing 17 are allowed to engage with the respective recesses 25 or 26.

Referring to Fig. 4, the condiment mill 1 is placed in a first orientation wherein the first compartment 2 is on top of the second compartment 5, the bushing 17 can move downwardly towards the second compartment 5 because of gravity, causing the first protrusions 21 to be received in and engaged with the corresponding first recesses 25 and the second protrusions 23 to be out of and disengaged from the second recesses 26. Therefore, by rotating the first compartment 2 around the rotation axis 8 while holding the second compartment 5 still, the bushing 17 is driven to rotate relative to the second compartment 5 due to the engagement between the first protrusions 21 and the first recesses 25. The rotation of the first compartment 2 is thus transmitted via the bushing 17 to the shaft 9, and to the second grinding wheel 39 via the shaft 9. As a result of the rotation of the second grinding wheel 39 relative to the immobile second grinding cylinder 40, the condiment contained in the second compartment 5 is ground and falls out of the mill 1. As the rotation of the shaft 9 is driven by the rotation of the first compartment 2, there is no relative rotation between the first grinding wheel 37 and the first grinding cylinder 38. In addition, in this orientation, the first grinding wheel 37 and the first grinding cylinder 38 are both on top of the condiments contained in the first compartment 2. Therefore the condiment in the first compartment 2 is not ground or released.

It should be noted that the condiment in the second compartment 5 can also be ground and released by placing the condiment mill 1 in the first orientation and rotating the second compartment 5 while holding the first compartment 2 still. In other words, as long as the condiment mill 1 is in the first orientation (that is, as long as the first compartment 2 is on top of the second compartment 5) and there is relative rotation between the first and second compartments 2, 5 around the rotation axis 8, the condiment contained in the second compartment 5 will be ground and released.

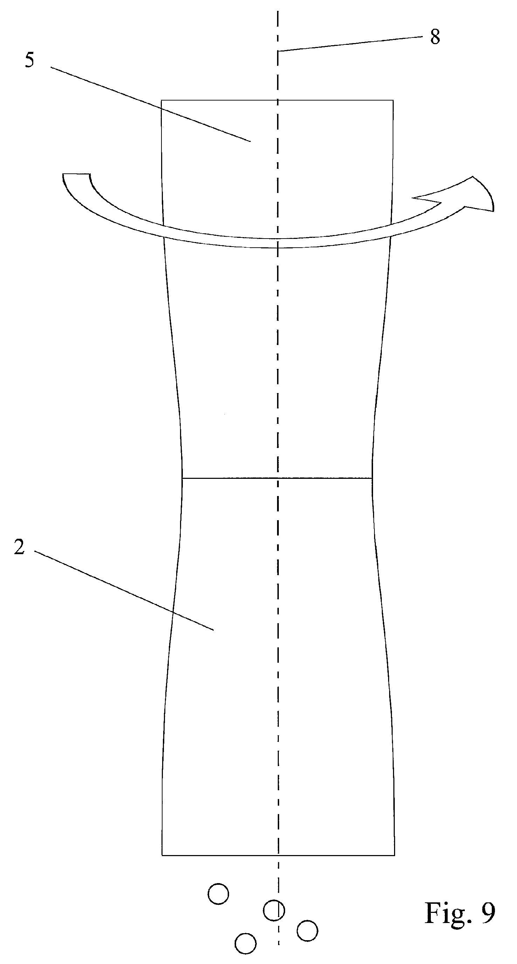

Then referring to Fig. 9, if the condiment contained in the first compartment 2 needs to be ground and released, the condiment mill 1 can be inverted such that the condiment mill 1 is in a second orientation wherein the second compartment 5 is on top of the first compartment 2. In this orientation, the bushing 17 can move towards the first compartment 2 because of gravity, causing the second protrusions 23 to be received in and engaged with the corresponding second recesses 26 and the first protrusions 21 to be out of and disengaged from the first recesses 25. Therefore, by rotating the second compartment 5 around the rotation axis 8 while holding the first compartment 2 still, the bushing 17 is driven to rotate relative to the first compartment 2 due to the engagement between the second protrusions 23 and the second recesses 26. The rotation of the second compartment 5 is thus transmitted via the bushing 17 to the shaft 9, and to the first grinding wheel 37 via the shaft 9. As a result of the rotation of the first grinding wheel 37 relative to the immobile first grinding cylinder 38, the condiment contained in the first compartment 2 is ground and falls out of the mill 1. As the rotation of the shaft 9 is driven by the rotation of the second compartment 5, there is no relative rotation between the second grinding wheel 39 and the second grinding cylinder 40. In addition, in this orientation, the second grinding wheel 39 and the second grinding cylinder 40 are both on top of the condiment contained in the second compartment 5. Therefore the condiment in the second compartment is not ground or released.

It would be appreciated that the condiment in the first compartment 2 can also be ground and released by placing the condiment mill 1 in the second orientation and rotating the first compartment 2 while holding the second compartment 5 still. In other words, as long as the condiment mill 1 is in the second orientation (that is, as long as the second compartment 5 is on top of the first compartment 2) and there is relative rotation between the first and second compartments 2, 5 around the rotation axis 8, the condiment contained in the first compartment 2 may be ground and released.

Simply put, the condiment mill of the present invention is used with one of the compartments being stacked on the other. By rotating the compartment on the top relative to the compartment at the bottom, the condiment contained in the compartment at the bottom will be ground and released out of the mill.

In the embodiment of the present invention described above, the first and second hub members 15 and 16 are operatively linked together by the bushing 17. The protrusions 21 and 23 formed on the bushing 17 ensure that the bushing 17 cannot be detached from the first hub member 15 or the second hub member 16. In this embodiment, when using the condiment mill 1, the first and second compartments 2 and 5 need to be pushed towards each other to ensure that the longitudinal distance 27 between the first protrusions 21 and the second protrusions 23 of the bushing 17 is larger than the longitudinal distance 28 between the first recesses 25 on the first hub member 15 and the second recesses on the second hub member 16 to implement the driving and grinding mechanisms of the mill 1.

Alternatively, additional means can be provided to connect the first and second hub members 15 and 16 in such a manner that they are rotatable relative to each other, with the longitudinal distance 27 between the first protrusions 21 and the second protrusions 23 of the bushing 17 larger than the longitudinal distance 28 between the first recesses 25 on the first hub member 15 and the second recesses on the second hub member 16.

In order to prevent the condiment contained in the mill from contacting the driving mechanism, or at least reduce the accumulation of condiment on the driving mechanism (which may hinder the proper operation of the driving mechanism), a first housing portion 29 is provided within the first compartment 2, and a second housing portion 30 is provided within the second compartment 5. The first housing portion 29 comprises a first cylindrical wall 31 extending from the proximal end plate 41 in a direction towards the distal end 4 of the first compartment 2. The first housing portion 29 further comprises a first cover 32 placed over the first cylindrical wall 31 and comprising a first orifice (33) for the shaft 9 to rotatably pass through. Similarly, the second housing portion 30 comprises a second cylindrical wall 34 extending from the proximal end plate 42 of the second compartment 5 in a direction towards the distal end 7 of the second compartment 5. The second housing portion 30 further comprises a second cover 35 placed over the second cylindrical wall 34 and comprising a second orifice 36 for the shaft 9 to rotatably pass through.

The first housing portion 29 and the second housing portions 30 together with the proximal end plates 41, 42 enclose the first and second hub members 15, 16 and the bushing 17. The bushing 17 is allow to rotate and move in the enclosure to drive the first and second grinding mechanism 10, 12. The sizes of the first orifice 33 and the second orifice 36 are configured to be as small as possible while allowing the shaft 9 to rotatably pass through, so as to reduce the amount of condiment that can enter the first and second housing portions 29, 30 as minimum as possible. The enclosure substantially isolates the first and second hub members 15, 16 and the bushing 17 from the condiments contained in the first and second compartments 2, 5.

In the above described embodiment, the first and second hub members 15 and 16 are formed integral with proximal end plates 41 and 42 of the first and second compartments 2 and 5, respectively. Alternatively, the first and second hub members 15 and 16 may also be formed as separate components independently and then fixedly mounted to the proximal end plates 41 and 42 of the first and second compartments 2 and 5, respectively.

While the present invention is described in connection with what is presently considered to be the most practical and preferred embodiment, it should be appreciated that the invention is not limited to the disclosed embodiment, and is intended to cover various modifications and equivalent arrangements included within the spirit and scope of the claims. Modifications and variations in the present invention may be made without departing from the novel aspects of the invention as defined in the claims, and this application is limited only by the scope of the claims.

### Numerical references

1 condiment mill
2 first compartment
3 proximal end of first compartment
4 distal end of first compartment
5 second compartment
6 proximal end of second compartment
7 distal end of second compartment
8 rotation axis
9 shaft
10 first grinding mechanism
11 first end of shaft
12 second grinding mechanism
13 second end of shaft
15 first hub member
16 second hub member
17 bushing
18 throughbore
19 first opening
20 second opening
21 first protrusion
22 first end of bushing
23 second protrusion
24 second end of bushing
25 first recess
26 second recess
27 longitudinal distance between first and second protrusions
28 longitudinal distance between first and second recesses
29 first housing portion
30 second housing portion
31 first wall
32 first cover
33 first orifice
34 second wall
35 second cover
36 second orifice
37 first grinding wheel
38 first grinding cylinder
39 second grinding wheel
40 second grinding cylinder
41 proximal end plate of the first compartment
42 proximal end plate of the second compartment

## Claims

1. A condiment mill (1) comprising:
a first compartment (2) having a proximal end (3) and a distal end (4),
a second compartment (5) having a proximal end (6) and a distal end (7), wherein the first compartment (2) and the second compartment (5) are stacked one on the other at their respective proximal ends (3, 6) in such a manner that the first and second compartments (2, 5) are rotatable relative to each other around a rotation axis (8),
a shaft (9) having a first end (11) and a second end (13) and extending along the rotation axis (8) through the proximal ends of the first and second compartments (2, 5) into the first and second compartments (2, 5),
a first grinding mechanism (10) arranged at the distal end (4) of the first compartment (2) and drivingly connected to the first end (11) of the shaft (9),
a second grinding mechanism (12) arranged at the distal end (7) of the second compartment (5) and drivingly connected to the second end (13) of the shaft (9),
a driving mechanism coupled to the shaft (9) and arranged to extend through the proximal ends (3, 6) of both the first and second compartments (2, 5), the driving mechanism being configured to be engageable with one of the first and second compartments (2, 5) and be caused by rotation of said engaged compartment to rotate relative to the other compartment which, in turn, drives the grinding mechanism in the other compartment by the shaft (9).

2. The condiment mill (1) of claim 1, further comprising:
a first hub member (15) fixedly secured to the proximal end (3) of the first compartment (2) and having an axial opening (19),
a second hub member (16) fixedly secured to the proximal end (6) of the second compartment (5) and having an axial opening (20),
wherein the driving mechanism comprises a bushing (17) coupled to the shaft (9) and rotatably and movably extending through the axial openings (19, 20) of the first and second hub members (15, 16), wherein the bushing (17) is able to move to engage with one of the first and second hub members (15, 16), and the rotation of the compartment with which the bushing (17) engages causes rotation of the bushing (17) so as to rotate the shaft (9) around the rotation axis (8) relative to the other compartment, and the rotation of the shaft (9) drives the grinding mechanism in the other compartment.

3. The condiment mill (1) of claim 2, wherein the first hub member (15) is formed integral with a proximal end plate (41) of the first compartment (2), and the second hub member (16) is formed integral with a proximal end plate (42) of the second compartment (5).

4. The condiment mill (1) of claim 2 or 3, wherein the bushing (17) has an axial throughbore (18) through which the shaft (9) extends to rotatably and movably couple to the bushing (17).

5. The condiment mill (1) of claim 4, wherein a cross section of the throughbore (18) corresponds to a cross section of the shaft (9), such that the bushing (17) is coupled to the shaft (9) in rotation around the rotation axis (8), and movable along the rotation axis (8) relative to the shaft (9).

6. The condiment mill (1) of claim 5, wherein the cross sections of the shaft (9) and the throughbore (18) are both rectangular.

7. The condiment mill (1) of any one of claims 2 to 6, wherein the bushing (17) has at least one first protrusion (21) extending radially from a first end (22) of the bushing (17), and at least one second protrusion (23) extending radially from a second end (24) of the bushing (17), and wherein the first hub member (15) comprises at least one first recess (25) engageable with the at least one first protrusion (21), and the second hub member (16) comprises at least one second recess (26) engageable with the at least one second protrusion (23).

8. The condiment mill (1) of claim 7, wherein the first and second hub members (15, 16) are arranged in such a positional fashion that allows either the at least one first protrusion (21) only or the at least one second protrusion (23) only of the bushing (17) to engage with the respective recess (25, 26) and the other protrusion is disengageable from the recess (25, 26) thereof.

9. The condiment mill (1) of claim 8, wherein the first and second hub members (15, 16) are arranged such that a longitudinal distance (27) between the first and second protrusions (21, 23) is larger than a longitudinal distance (28) between the first and second recesses (25, 26), thereby allowing either the at least one first protrusion (21) only or the at least one second protrusion (23) only of the bushing (17) to engage with the respective recess (25, 26).

10. The condiment mill (1) of claim 7 or 8, wherein the bushing (17) comprises three spaced circumferential first protrusions (21) at the first end (22) thereof and three spaced circumferential second protrusions (23) at the second end (24) thereof, and wherein six first recesses (25) and six second recesses (26) engageable with the respective first and second protrusions (21, 23) are formed on the first and second hub members (15, 16), respectively.

11. The condiment mill (1) of any one of claims 2 to 10, wherein a first housing portion (29) is provided within the first compartment (2) and a second housing portion (30) is provided within the second compartment (5), the first and second housing portions (29, 30) together enclose the first and second hub members (15, 16) and the bushing (17) in a manner that the bushing (17) is able to rotate and move.

12. The condiment mill (1) of claim 11, wherein the first housing portion (29) comprises a first cylindrical wall (31) extending from a proximal end plate (41) of the first compartment (2) in a direction towards the distal end (4) of the first compartment (2), and a first cover (32) placed over the first cylindrical wall (31) and comprising a first orifice (33) for the shaft (9) to rotatably pass through, and wherein the second housing portion (30) comprises a second cylindrical wall (34) extending from a proximal end plate (42) of the second compartment (5) in a direction towards the distal end (7) of the second compartment (5), and a second cover (35) placed over the second cylindrical wall (34) and comprising a second orifice (36) for the shaft (9) to rotatably pass through.

13. The condiment mill (1) of claim 12, wherein the first cylindrical wall (31) is integrally formed with the first hub member (15), and the second cylindrical wall (34) is integrally formed with the second hub member (16).

14. The condiment mill (1) of any one of claims 1 to 13, wherein the first grinding mechanism (10) comprises a first grinding wheel (37) fixedly secured to the first end (11) of the shaft (9), and a first grinding cylinder (38) open at both ends and fixedly attached to the distal end (4) of the first compartment (2), and wherein the second grinding mechanism (12) comprises a second grinding wheel (39) open at both ends and fixedly secured to the second end (13) of the shaft (9), and a second grinding cylinder (40) fixedly attached to the distal end (7) of the second compartment (5).

15. The condiment mill (1) of claim 14, wherein the first and second grinding wheels (37, 39) are of a conical shape, and are rotatably accommodated in the first and second grinding cylinders (38, 40), respectively.
